(19) Europäisches Patentamt
European Patent Office
Office européen des brevets

(11) **EP 1 525 430 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(21) Anmeldenummer: **03787614.1**

(22) Anmeldetag: **27.06.2003**

(51) Int Cl.:
***G01B 17/02*** (2006.01)

(86) Internationale Anmeldenummer:
**PCT/DE2003/002150**

(87) Internationale Veröffentlichungsnummer:
**WO 2004/017021 (26.02.2004 Gazette 2004/09)**

(54) **VERFAHREN ZUR BESTIMMUNG DER SCHALLGESCHWINDIGKEIT IN EINEM BASISMATERIAL, INSBESONDERE FÜR EINE WANDDICKENMESSUNG**

METHOD FOR DETERMINING THE SOUND VELOCITY IN A BASIC MATERIAL, PARTICULARLY FOR MEASURING THE THICKNESS OF A WALL

PROCEDE POUR DETERMINER LA VITESSE DU SON DANS UN MATERIAU DE BASE, EN PARTICULIER POUR MESURER UNE EPAISSEUR DE PAROI

(84) Benannte Vertragsstaaten:
**AT BE BG CH CY CZ DE DK EE ES FI FR GB GR HU IE IT LI LU MC NL PT RO SE SI SK TR**

(30) Priorität: **17.07.2002 DE 10232475**
**12.06.2003 DE 10327102**

(43) Veröffentlichungstag der Anmeldung:
**27.04.2005 Patentblatt 2005/17**

(73) Patentinhaber:
 • **Agfa NDT GmbH**
 **D-50354 Hürth (DE)**
 • **Renzel, Peter**
 **52355 Düren-Birgel (DE)**

(72) Erfinder: **RENZEL, Peter**
 **52355 Düren-Birgel (DE)**

(74) Vertreter: **Bauer, Wulf**
 **Bauer Vorberg Kayser**
 **Patentanwälte**
 **Goltsteinstrasse 87**
 **50968 Köln (DE)**

(56) Entgegenhaltungen:
 **US-A- 5 894 092     US-A- 6 035 717**

 • **LAKESTANI FERODOUN ET AL.: "Application of ultrasonic Rayleigh waves to thickness measurement of metallic coatings" NDT&E INTERNATIONAL, Bd. 28, Nr. 3, 1995, Seiten 171-178, XP001179436**
 • **COSTE J.F. ET AL.: "Non-Destructive thickness determination of metallic coatings using ultrasonic Rayleigh waves" MATERIALS SCIENCE FORUM, Bd. 210-213, 1996, Seiten 335-342, XP009025690**

EP 1 525 430 B1

**Beschreibung**

Die Erfindung bezieht sich auf ein Verfahren zur Bestimmung der Schallgeschwindigkeit Cb in einem Basismaterial unter Verwendung eines Ultraschallprüfkopfes, der einen Sendeschwinger, einen Empfangsschwinger und einen Vorlaufkörper aufweist, wobei der Vorlaufkörper a) eine Koppelfläche hat, mit der der Prüfkopf an das Basismaterial ankoppelbar ist, b) den Empfangsschwinger sowie den Sendeschwinger aufnimmt und c) eine Schallgeschwindigkeit Cv hat, der Sendeschwinger und der Empfangsschwinger jeweils schräg zueinander und schräg zur Koppelfläche unter einem Eintrittswinkel ausgerichtet sind, sodass eine Hauptsenderichtung des Sendeschwingers und eine Hauptempfangsrichtung des Empfangsschwingers sich unterhalb der Koppelfläche schneiden, Sendeschwinger und Empfangsschwinger einen Mittenabstand K voneinander haben, der Sendeschwinger einen Mittenabstand Ds von der Koppelfläche und der Empfangsschwinger einen Abstand De von der Koppelfläche hat, bei welchem Verfahren ein Ultraschallimpuls vom Sendeschwinger erzeugt wird, durch den Vorlaufkörper in das Basismaterial läuft, dort eine Kriechwelle hervorruft und von dieser ein Teil über den Vorlaufkörper den Empfangsschwinger erreicht.

Die Bestimmung der Schallgeschwindigkeit Cb ist Voraussetzung dafür, die Wanddicke des Basismaterials bestimmen zu können. Zwar ist es bekannt, die Wanddicke eines Basismaterials durch Mehrfachreflexion eines Impulses an einer Eintrittsfläche und einer Rückfläche des Basismaterials zu bestimmen, dieses Verfahren setzt aber ausreichend spiegelnde und damit glatte Flächen, insbesondere eine ausreichend glatte Rückfläche voraus, damit es zu mehrfachen Hin- und Herläufen im Basismaterial kommt. Bei rauhen Rückflächen lässt sich dieses Verfahren nicht anwenden, vielmehr ist man auf einen einmaligen Hin- und Herlauf angewiesen. Über die Schallgeschwindigkeit Cb kann dann die Wandstärke ermittelt werden.

Aus US 6,035,717 sind ein Verfahren und eine Vorrichtung zur Bestimmung der Dicke eines beschichteten Basismaterials bekannt. Bei diesem Verfahren wird für die Bestimmung der Schallgeschwindigkeit Cb des Basismaterials zunächst das unbeschichtete Basismaterial gemessen, es wird ein Impuls von einem Sendeschwinger durch den Vorlaufkörper in das Basismaterial eingeschallt, wo eine Kriechwelle erzeugt wird, von der wieder ein Anteil auskoppelt und vom Empfangsschwinger empfangen wird. Insoweit besteht Übereinstimmung mit der Erfindung.

Der Weg dieses Impulses wird gemäß US 6,035,717 nun aber als fest vorgegeben angenommen. Dem Erfinder dieser US-Patentschrift war, so hat es den Anschein, wohl bewusst, dass diese Annahme eines geometrisch festen Weges entlang der Hauptstrahlen gewisse Ungenauigkeiten in der Bestimmung der Schallgeschwindigkeit Cb bringt. Er schlägt daher in praktischen Anweisungen vor, die Abstände der beiden Schwinger von der Koppelfläche möglichst gering zu halten. Dadurch wird in der Tat die Bestimmung der Schallgeschwindigkeit im Basismaterial genauer, anders ausgedrückt wird die Ungenauigkeit verringert. Nun hat aber ein Prüfkopf mit kurzer Schalllaufstrecke des Vorlaufkörpers den Nachteil, dass nur wenig Material des Vorlaufkörpers für die bei jeder praktischen Prüfung stattfindende Abnutzung des Vorlaufkörpers zur Verfügung steht, der Prüfkopf also früher erneuert werden muss, als ein Prüfkopf mit grösserer Vorlaufstrecke.

Hier setzt nun die Erfindung ein. Sie hat es sich zur Aufgabe gemacht, das Verfahren nach der US 6,035,717 A dahingehend weiterzuentwickeln, dass die Schallgeschwindigkeit Cb im Basismaterial genauer bestimmt wird, dass damit auch präziser die Dicke einer Schicht auf diesem Basismaterial bestimmbar ist, und dass ein Prüfkopf verwendet werden kann, der eine für die Praxis ausreichend dicke Vorlaufstrecke aufweisen kann.

Gelöst wird diese Aufgabe ausgehend von den eingangs genannten Merkmalen und diese einschließend dadurch, dass die kürzeste Schalllaufzeit Ttot gemessen wird, die bei den unterschiedlichen, sich im Eintrittswinkel unterscheidenden Schalllaufwegen auftritt, und die Schallgeschwindigkeit Cb im Basismaterial bestimmt wird über denjenigen Weg, der zwischen Sendeschwinger und Empfangsschwinger in Abhängigkeit von der Schallgeschwindigkeit die kürzeste Gesamtlaufzeit Ttot liefert.

Bei diesem Verfahren wird der Umstand berücksichtigt, dass der Weg, den der Impuls durch den Vorlaufkörper, entlang der Oberfläche des Basismaterials (als Oberflächenwelle) und zurück durch den Vorlaufkörper nimmt, neben den vorbekannten Grössen K, Dv und Cv beeinflusst wird (K = Mittelpunktsabstand der Kontaktflächen der Schwinger, Dv = Mittelpunktsabstand der Kontaktfläche eines Schwingers von der Koppelfläche) durch die Schallgeschwindigkeit Cb. Ist diese im Vergleich zur Schallgeschwindigkeit Cv im Vorlaufkörper relativ gross, so wird auch der Anteil der Laufstrecke Sb entlang der Oberfläche des Basismaterials relativ gross. Ist dagegen die Schallgeschwindigkeit Cb im Basismaterial relativ klein, so wird die Laufstrecke Sb der Oberflächenwelle im Basismaterial relativ kurz, die Laufstrecken Sv innerhalb des Vorlaufkörpers werden dagegen länger. Ähnliche Verhältnisse liegen auch bei der Lichtbrechung zwischen unterschiedlichen optischen Medien, beispielsweise Wasser und Luft, vor. Auch in diesem Fall ist der geometrisch kürzeste Weg nicht der zeitlich kürzeste Weg für einen Lichtimpuls.

Die Leistung der Erfindung besteht nun darin, erkannt zu haben, dass das Erfassen der kürzesten Laufzeit Ttot des Ultraschallimpulses und ein Optimieren aller möglichen Schalllaufwege zu demjenigen Schalllaufweg hin, der die kürzeste Gesamtlaufzeit als Funktion von Cb liefert, eine präzise Aussage über die Schallgeschwindigkeit Cb im Basismaterial liefert. Der Erfindung liegen somit die tatsächlichen Wege zugrunde, die ein Schallimpuls zurücklegt. Sie macht keine Annahmen über den Weg, wie dies in der US 6,035,717 A der Fall ist. Die Fehler dieses vorbekannten Messverfahrens und der entsprechenden Vorrichtung werden daher erfindungsgemäss vermieden.

Weitere Vorteile und Merkmale der Erfindung ergeben sich aus den übrigen Ansprüchen sowie der nun folgenden. Beschreibung nicht einschränkend zu verstehender Ausführungsbeispiele der Erfindung, die unter Bezugnahme auf die Zeichnung im folgenden näher erläutert werden, dabei wird auch das erfindungsgemässe Verfahren erläutert. In der Zeichnung zeigen:

Figur 1: Eine prinzipielle Darstellung in Seitenansicht eines Prüfkopfes mit zwei Schwingern, der an ein Basismaterial angekoppelt ist, die ein- zelnen Teilstrecken des Gesamtweges sind dargestellt,

Figur 2: die Darstellung gemäß Fig. 1 mit eingezeichneten Laufstrecken, Schallgeschwindigkeiten usw.,

Figur 3: eine Darstellung wie Figur 1, jedoch hat nun zusätzlich das Ba- sismaterial eine dünne Schicht (ein Coating), beispielsweise eine Farbe, einen Metallüberzug oder eine Kunststoffbeschichtung, und

Figur 4: eine Darstellung ähnlich Figur 1, jedoch nun mit zwei zusätzlichen Schwingern für eine Wanddickenmessung.

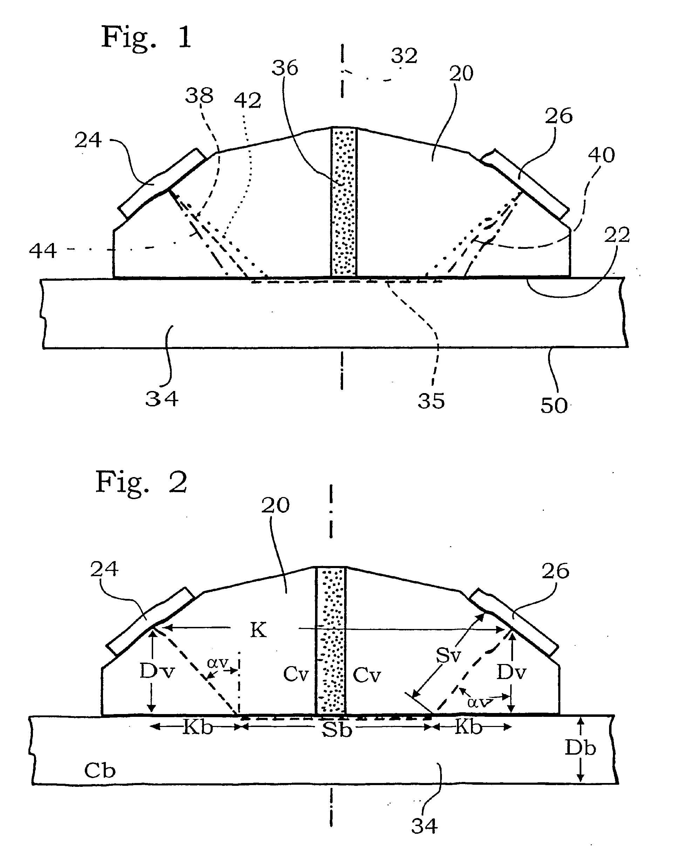

Der in Figur 1 gezeigte Prüfkopf hat einen speziell geformten, im wesentlichen prismatischen Vorlaufkörper 20. Dieser hat eine ebene Koppelfläche 22, auch aktive Fläche genannt und dieser gegenüberliegend Abschrägungen, an denen ein Sendeschwinger 24 bzw. ein Empfangsschwinger 26 gehalten sind, insbesondere aufgekittet sind. Beide Schwinger 24, 26 sind baugleich. Sie sind schräg zueinander und auch schräg zur Koppelfläche 22 angeordnet. Auf diese Anordnung wird im folgenden näher eingegangen.

Eine Mittelsenkrechte, also eine rechtwinklig zur Kontaktfläche des Schwingers mit dem Vorlaufkörper 20 und durch den Mittelpunkt dieser Kontaktfläche des Schwingers verlaufende Linie verläuft in einem bestimmten Winkel zur Koppelfläche 22, dieser Winkel beträgt $(90° - \alpha_v)$ und ist für beide Schwinger 24, 26 gleich. Weiterhin liegen die jeweiligen Mittelsenkrechten in derselben Ebene, nämlich in der Ebene der Fig. 1.

Dies kann auch anders ausgedrückt werden: Die beiden Schwinger 24, 26 sind klappsymmetrisch zu einer Symmetrieebene 32 angeordnet. Sie sind so schräg zur Koppelfläche 22 gestellt, dass in einem Basismaterial 34, an das der Vorlaufkörper 20 über geeignete, an sich bekannte Mittel angekoppelt ist, eine Oberflächenwelle 35 erzeugt wird, worauf noch im einzelnen eingegangen wird.

Eine im wesentlichen entlang der Symmetrieebene 3 2 vorgesehene Trennschicht 36 sorgt dafür, dass ein direktes Übersprechen (cross talk) zwischen Sendeschwinger 24 und Empfangsschwinger 26 unterbunden wird.

Die angegebenen Mittelsenkrechten fallen üblicherweise mit einem Hauptstrahl, also einem Hauptsendestrahl 38 und einem Hauptempfangsstrahl 40 zusammen.

Die Schallge schwindigkeit Cv im Vorlaufkörper 20 ist bekannt. Bekannt ist auch der Ab stand K zwischen den Flächenmittelpunkten der beiden Schwinger 24, 26. Schliesslich sind der Abstand des Flächenmittelpunktes des Sendeschwingers 24 von der Koppelfläche 22 und der Abstand des Mittelpunktes des Empfangsschwingers 26 von der Koppelfläche 22 bestimmbar und somit bekannt. Aufgrund der Symmetrie haben beide den Wert Dv. Mit Hilfe nur dieser Vorgaben ist es nun möglich, die Schallgeschwindigkeit Cb im Basismaterial 34 zu bestimmen. In einem weiteren Schritt kann man dann die Dicke, also die Wanddicke Db des Basismaterials 34 bestimmen.

Wenn die Schallgeschwindigkeit Cb im Basismaterial 34 etwa so gross ist wie die Schallgeschwindigkeit von Stahl, ist der kürzeste Weg eines Schallimpulses vom Sendeschwinger 24 zum Empfangsschwinger 26 der folgende: Der Impuls läuft entlang des Hauptsendestrahls, dann als Oberflächenwelle 35 im Basismaterial 34 und schliesslich wieder entlang des Hauptempfangstrahls 40 in den Empfangsschwinger 26. Dieser- Weg ist in Fig. 1 gestrichelt eingezeichnet, er verläuft entlang dem Hauptsendestrahl 38 und dem Hauptempfangsstrahl 40.

Ist nun aber die Schallgeschwindigkeit Cb im Basismaterial 34 kleiner als diejenige von Stahl, so wird der Schallweg möglichst viel Strecke innerhalb des Vorlaufkörpers 20 nutzen, die Länge der Strecke Sb, die durch die Oberflächenwelle 38 im Basismaterial 34 realisiert ist, wird kurz. Dieser Fall ist in Figur **1** durch einen gepunktet dargestellten S challlaufweg 42 dargestellt.

Ist andersherum die Schallgeschwindigkeit Cb im Basismaterial grösser als diejenige Stahl, wird die Schallstrecke Sv innerhalb des Vorlaufkörpers 20 kurz zugunsten einer längeren Laufstrecke Sb als Oberflächenwelle 35. Dieser Fall ist in Figur 1 durch den strichpunktierten Schalllaufweg 44 dargestellt.

Zur Vereinfachung der Darstellung ist in Figur 1 lediglich der komplette Schalllaufweg gestrichelt dargestellt, der entlang der Hauptstrahlen 38, 40 verläuft. Man erkennt, dass die Laufstrecke Sb der Oberflächenwelle 35 eine Funktion der Schallgeschwindigkeit Cb im Basismaterial 34 ist und zudem von den konstanten Größen K, Cv und Dv abhängt. Erfindungsgemäß wird die Schallgeschwindigkeit Cb im Basismaterials 34 über die Optimierung des zugehörigen Schalllaufweges erhalten. Es wird also der Schalllaufweg zugrunde gelegt, der die kürzeste Gesamtlaufzeit Ttot als Funktion der zu ermittelnden Schallgeschwindigkeit Cb liefert.

Nun nimmt zwar die Amplitude des Schalldrucks ab, je größer der Winkel zum Hauptstrahl ist. Misst man jedoch lediglich das Signal mit kürzester Gesamtlaufzeit Ttot, so ist man innerhalb gewisser Grenzen von der Amplitude des Empfangssignals unabhängig. Ideal wäre es, wenn die Schwinger 24, 26 Kugelstrahler wären, dies ist jedoch nicht der Fall. Innerhalb der in der Praxis vorkommenden Schallgeschwindigkeiten macht sich der Einfluss der nicht kugelförmigen Abstrahlung der Schwinger 24, 26 nicht so stark bemerkbar, dass man dies berücksichtigen und speziell auswerten müsste. Die Ausrichtung der Schwinger 24, 26 geschieht idealerweise für einen mittleren Wert der Schallgeschwindigkeit Cb (z.B. für Stahl Cb etwa 6000 m/s).

Der jeweilige Weg, den der Schallimpuls mit der kürzesten Gesamtlaufzeit Ttot nimmt, ist somit eine Funktion der Schallgeschwindigkeit Cb und weiterhin abhängig von den bekannten Werten K, Dv und Cv. Bei nicht klappsymmetrischem Aufbau müssen die unterschiedlichen Mittelpunktsentfernungen des Sendeschwingers 24 und des Empfangsschwingers 26 von der Koppelfläche 22 berücksichtigt werden.

Gemäss Figur 1 breitet sich der Ultraschall vom Sendeschwinger 24 über ein erstes Wegstück Sv bis hin zum Basismaterial 34 aus, wofür er die Zeit Tv benötigt. Dort wird eine Kriechwelle 35 erzeugt. Sie hat die in Figur 2 angegebene Länge Sb. Diese Länge wird in der Zeit Tb durchlaufen. Von der Kriechwelle erreicht ein Anteil den Empfangsschwinger 26 über einen Weg, der aufgrund der Symmetrie die Länge Sv hat und für den die Zeit Tv benötigt wird.

Gesucht wird nach der Entfernung Sb zwischen dem Anfangspunkt und dem Endpunkt der Kriechwelle bzw. Oberflächen-welle 35 für longitudinale Wellen:

Im folgenden werden allgemeine Formeln aufgestellt für die Schallausbreitung. Dabei wird lediglich die kürzeste Gesamtlaufzeit Tto-t beachtet. Um diese zu ermitteln, ist es notwendig, die gesamte Laufstrecke vom Sendeschwinger 24 zum Empfangsschwinger 26 zu berücksichtigen. Als zeitlich konstant jedenfalls für die kurze Dauer der Messung, und auch als vorbekannt werden angenommen K = Mittelpunktsentfernung der Prüfköpfe 24, 26; Dv = Mittelpunktsentfernung der Schwinger 24, 26 von der Koppelfläche 22 und Cv = Schallgeschwindigkeit im Vorlaufkörper.

Ein vom Sendeschwinger 24 ausgesandter Ultraschallimpuls bewirkt im Basismaterial 34 nicht nur eine Oberflächenwelle 35, sondern auch noch weitere Wellen, die longitudinale Oberflächenwelle 35 hat die kürzeste Laufstrecke und auch die kürzeste Gesamtlaufzeit Ttot.

Gemäß Figur 2 gilt:

$$(1) \quad S_b = K - 2K_b;$$

$$(2) \quad \tan\alpha_v = \frac{K_b}{D_v}; \rightarrow K_b = D_v \tan\alpha_v;$$

$$(3) \quad S_b = K - 2D_v \tan\alpha_v; \qquad\qquad (1/2)$$

Unterschiedliche Schalllaufwege unterscheiden sich im Eintrittswinkel $\alpha_v$. Dieser wird erhalten unter der Annahme einer kürzest möglichen Gesamtlaufzeit Ttot:

$$(4) \quad T_{tot} = 2T_v + T_b;$$

$$(5) \quad C_v = \frac{S_v}{T_v}; \rightarrow T_v = \frac{S_v}{C_v};$$

$$(6) \quad C_b = \frac{S_b}{T_b}; \rightarrow T_b = \frac{S_b}{C_b};$$

$$(7) \quad \cos\alpha_v = \frac{D_v}{S_v}; \rightarrow S_v = \frac{D_v}{\cos\alpha_v};$$

$$(8) \quad T_v = \frac{D_v}{C_v \cos\alpha_v}; \qquad\qquad (5/7)$$

$$(9) \quad T_{tot} = \frac{2D_v}{C_v \cos\alpha_v} + \frac{K - 2D_v \tan\alpha_v}{C_b}; \qquad\qquad (4/8/3/6)$$

$$(10) \quad T_{tot} = \frac{K}{C_b} + 2D_v\left(\frac{1}{C_v \cos\alpha_v} - \frac{\tan\alpha_v}{C_b}\right); \qquad\qquad (9)$$

Gesucht wird ein Minimum der linearen Funktion Ttot($\alpha$v). Dies kann beispielsweise über die erste Ableitung nach dem Winkel ($\alpha_v$ ermittelt werden, die erste Ableitung muss für einen gewissen Winkel $\alpha_v$ null sein, die zweite Ableitung muss positiv sein:

$$(11) \quad \frac{\partial T_{tot}(\alpha_v)}{\partial \alpha_v} = 0!$$

$$(12) \quad \frac{\partial T_{tot}(\alpha_v)}{\partial \alpha_v} = 2D_v\left(\frac{\sin\alpha_v}{C_v \cos^2\alpha_v} - \frac{1}{C_b \cos^2\alpha_v}\right) = 0; \qquad (10)$$

$$(13) \quad \frac{\sin\alpha_v}{C_v} - \frac{1}{C_b} = 0; \rightarrow \sin\alpha_v = \frac{C_v}{C_b}; \rightarrow \alpha_v = \arcsin\left(\frac{C_v}{C_b}\right); \qquad (12)$$

Berücksichtigt man nun (3), erkennt man, dass die Schalllaufstrecke Sb abhängig ist von den beiden Schallgeschwindigkeiten Cv und Cb:

$$(14) \quad S_b = K - 2D_v \tan\left(\arcsin\left(\frac{C_v}{C_b}\right)\right); \qquad\qquad (3/12)$$

Da man K, Dv und Cv als konstant annehmen kann, bedeutet dies: Sb = f (Cb). Die nachfolgende Gleichung (15) beschreibt nun die Abhängigkeit zwischen der gemessenen Gesamtlaufzweit Ttot und der zu ermittelnden Schallgeschwindigkeit Cb:

$$(15) \quad T_{tot} = \frac{K}{C_b} + 2D_v \left( \frac{1}{C_v \cos(\arcsin(\frac{C_v}{C_b}))} - \frac{\tan(\arcsin(\frac{C_v}{C_b}))}{C_b} \right); \qquad (9/12)$$

Damit ist ein eindeutiger Zusammenhang zwischen der Gesamtlaufzeit Ttot und der zu ermittelnden Schallgeschwindigkeit Cb erreicht. Alle anderen Größen in der Gleichung (15) sind bekannt und konstant.

Somit ist über die Gesamtlaufzeit Ttot eindeutig die Bestimmung der Schallgeschwindigkeit Cb im Basismaterial möglich. Mit dieser Erkenntnis kann nun die Wanddicke Db des Basismaterials bestimmt werden.

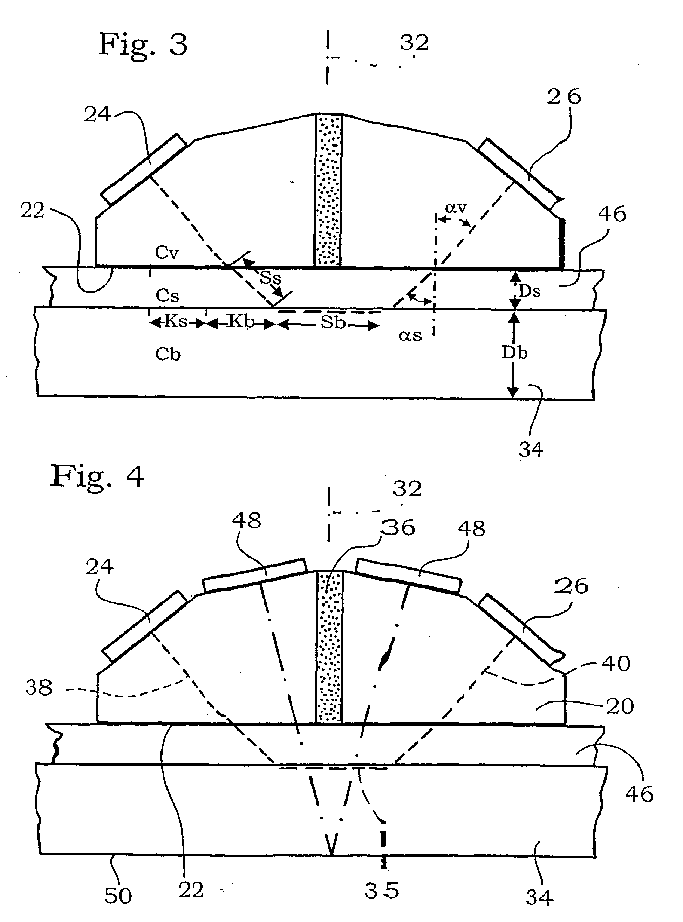

Figur 3 zeigt die Anordnung aus den voran gegangenen Figuren, jedoch befindet sich nun zusätzlich eine Schicht 46, ein sogenanntes Coating auf dem Basismaterial 34. Diese Schicht hat eine Dicke Ds. Sie soll über die Schallgeschwindigkeit Cs der Schicht ermittelt werden. Da auch diese unbekannt ist, wird wieder wie zuvor zunächst die Schallgeschwindigkeit ermittelt.

Figur 3 zeigt wiederum lediglich die Schalllaufstrecke mit der kürzesten Gesamtlaufzeit Ttot. Es finden zwar noch andere Ausbreitungen statt, beispielsweise wird auch an der der Koppelfläch e 22 zu gewandten Fläche des Coatings 46 eine Oberflächenwelle erzeugt, diese soll aber zeitlich nach der Oberflächenwelle 35 im Basismaterial 34 eintreffen. Dies bedeutet, dass die Schallgeschwindigkeit Cb im Basismaterial 34 ausreichend größer als die Schallgeschwindigkeit Cs in der Schicht 46 sein muss. In der Praxis ist dies zumeist erfüllt. Das Basismaterial ist typischerweise ein Metall, die Schallgeschwindigkeiten liegen bei 4500 bis 7000 m/s. Die Schicht 46 ist typischerweise ein Kunststoff, eine Farbe und dergleichen, die Schallgeschwindigkeiten liegen typischerweise bei 2000 bis 3000 ms. Für den Fall, dass die Schallgeschwindigkeit Cs in der Schicht 46 relativ groß ist, beispielsweise die Schicht ein Metallüberzug auf einem Basismaterial aus Kunststoff ist, die Schicht aus einem Metall höherer Schallgeschwindigkeit als das Basismaterial besteht, z. B. Coating in Ag, Basismaterial in Au, muss entsprechend den voraus gegangenen Überlegungen gearbeitet werden, indem einfach als Basismaterial die Schicht 46 eingesetzt wird.

Im Folgenden wird der in Figur 3 gezeigte Schalllaufweg als kürzester Laufweg betrachtet. Der Eintrittwinkel $\alpha_v$ wird in der Schicht 4 6 geändert zu αs. Die Laufstrecken im Volumen der Schicht 46 ergeben sich aus Figur 3, sie betragen Ss. Die zugehörige Schalllaufzeit beträgt Ts.

Für die kürzeste Gesamtlaufzeit gilt dann:

$$(16) \quad T_{tot} = 2(T_v + T_s) + T_b;$$

$$(17) \quad C_v = \frac{S_v}{T_v}; \rightarrow T_v = \frac{S_v}{C_v};$$

$$(18) \quad \cos\alpha_v = \frac{D_v}{S_v}; \longrightarrow S_v = \frac{D_v}{\cos\alpha_v};$$

$$(19) \quad T_v = \frac{D_v}{C_v \cos\alpha_v}; \qquad\qquad (17/18)$$

In der Schicht 46 sind die Verhältnisse entsprechend, für die Schicht 46 gilt:

$$(20) \quad T_s = \frac{D_s}{C_s \cos\alpha_s}; \qquad\qquad (19)$$

$$(21) \quad T_b = \frac{S_b}{C_b};$$

$$(22) \quad S_b = K - 2(K_b + K_s);$$

$$(23) \quad \tan\alpha_v = \frac{K_s}{D_v}; \longrightarrow K_s = D_v \tan\alpha_v;$$

$$(24) \quad \tan\alpha_s = \frac{K_b}{D_v}; \longrightarrow K_b = D_s \tan\alpha_s;$$

$$(25) \quad S_b = K - 2(D_s \tan\alpha_s + D_v \tan\alpha_v); \qquad (22/23/24)$$

$$(26) \quad T_b = \frac{K - 2(D_s \tan\alpha_s + D_v \tan\alpha_v)}{C_b}; \qquad (21/25)$$

Es liegen nun alle Elemente für Ttot vor:

$$(27) \quad T_{tot} = 2\left(\frac{D_v}{C_v \cos\alpha_v} + \frac{D_s}{C_s \cos\alpha_s}\right) + \frac{K - 2(D_s \tan\alpha_s + D_v \tan\alpha_v)}{C_b}; \qquad (16/19/20/26)$$

$$(28) \quad T_{tot} = \frac{2D_v}{C_v \cos\alpha_v} + \frac{2D_s}{C_s \cos\alpha_s} + \frac{K}{C_b} - \frac{2D_s \tan\alpha_s}{C_b} - \frac{2D_v \tan\alpha_v}{C_b}; \qquad (27)$$

$$(29) \quad T_{tot} = \frac{K}{C_b} + 2\left(D_v\left(\frac{1}{C_v \cos\alpha_v} - \frac{\tan\alpha_v}{C_b}\right) + D_s\left(\frac{1}{C_s \cos\alpha_s} - \frac{\tan\alpha_s}{C_b}\right)\right); \qquad (28)$$

Die Gesamtlaufzeit Ttot ist nun also nicht nur (wie in (15)) eine Funktion des Eintrittswinkels $\alpha$v, sondern auch eine Funktion des Eintrittswinkels $\alpha$s un d lässt sich wie folgt darstellen:

$$(30) \quad T_{tot}(\alpha_v, \alpha_s) = \frac{K}{C_b} + 2(f_1(\alpha_v) + f_2(\alpha_s)); \qquad (29)$$

Wenn die Funktion Ttot($\alpha$v, $\alpha$s) ein Minimum hat, kann dies ebenso wieder über die erste Ableitung nach den beiden Winkeln festgestellt werden. Die ersten Ableitungen müssen 0 sein:

$$(31) \quad \frac{\partial f_1(\alpha_v)}{\partial \alpha_v} = 0!$$

$$(32) \quad \frac{\partial f_2(\alpha_s)}{\partial \alpha_s} = 0!$$

$$(33) \quad \frac{\partial f_1(\alpha_v)}{\partial \alpha_v} = D_v(\frac{\sin\alpha_v}{C_v \cos^2\alpha_v} - \frac{1}{C_b \cos^2\alpha_v}) = 0 \qquad (31/29)$$

$$(34) \quad \frac{\sin\alpha_v}{C_v} - \frac{1}{C_b} = 0; \rightarrow \frac{\sin\alpha_v}{C_v} = \frac{1}{C_b}; \rightarrow \sin\alpha_v = \frac{C_v}{C_b}; \rightarrow \alpha_v = \arcsin(\frac{C_v}{C_b}); (33)$$

$$(35) \quad \frac{\partial f_2(\alpha_s)}{\partial \alpha_s} = D_s(\frac{\sin\alpha_s}{C_s \cos^2\alpha_s} - \frac{1}{C_b \cos^2\alpha_s}) = 0 \qquad (32/29)$$

$$(36) \quad \frac{\sin\alpha_s}{C_s} - \frac{1}{C_b} = 0; \rightarrow \frac{\sin\alpha_s}{C_s} = \frac{1}{C_b}; \rightarrow \sin\alpha_s = \frac{C_s}{C_b}; \rightarrow \alpha_s = \arcsin(\frac{C_s}{C_b}); (35)$$

Die Ergebnisse (34) und (36) werden nun in die Gleichung (29) eingesetzt, dies ergibt:

$$(37)$$

$$T_{tot} = \frac{K}{C_b} + 2(D_v(\frac{1}{C_v \cos\arcsin(\frac{C_v}{C_b})} - \frac{\tan\arcsin(\frac{C_v}{C_b})}{C_b}) + D_s(\frac{1}{C_s \cos\arcsin(\frac{C_s}{C_b})} - \frac{\tan\arcsin(\frac{C_s}{C_b})}{C_b}));$$

$$(29/34/36))$$

Über ein geeignetes Messinstrument, beispielsweise das Gerät DMS 2 der Anmelderin kann die kürzeste Gesamtlaufzeit Ttot gemessen werden. Über sie kann die Dicke Ds der Schicht 46 und/oder kann die Dicke Db des Basismaterials 34 nun bestimmt werden, wenn die Schallgeschwindigkeiten Cs und Cb bekannt sind. So kann man Cb an einer -unbeschichteten Stelle des Prüfkörpers mit Hilfe von (27) bestimmen. Über ein zusätzliches Schwingerpaar für Dickenmessung mit den Schwingern 48, die baugleich sind, wird steil eingeschallt, siehe Figur 4. Es wird ein Rückwandecho erzeugt, dessen Laufzeit um die Laufzeit von Ds reduziert wird. Hieraus errechnet man bei bekannter Schallgeschwindigkeit Cb die Dicke Db des Basismaterials.

Ein zweites, zeitlich nachfolgendes Echo erhält man von einer Rückwand 50 des Basismaterials 34. Aus der Zeitdifferenz zwischen den beiden Echos und der zuvor gemessenen Schallgeschwindigkeit Cb im Basismaterial 34 kann dessen Dicke Db bestimmt werden. Die Dicke Db kann aber auch als Differenz dieses Echos der Rückwand 50 zum Eintrittsecho unter Berücksichtigung der Schallgeschwindigkeiten, abzüglich der Dicke Ds der Schicht 46 erhalten werden.

Aus der Gleichung (37) werden noch folgende Zusammenhänge erkennbar bzw. deutlich:

1) $\dfrac{C_v}{C_b}$ und $\dfrac{C_s}{C_b}$ müssen kleiner als 1 sein;

2) $C_s$ kann kleiner als $C_v$ sein.

## Patentansprüche

1. Verfahren zur Bestimmung der Schallgeschwindigkeit Cb in einem Basismaterial (34) unter Verwendung eines Ultraschallprüfkopfes, der einen Sendeschwinger (24), einen Empfangsschwinger (26) und einen VorlaufKörper (20) aufweist, wobei der Vorlaufkörper (20) a) eine Koppelfläche (22) hat, mit der der Prüfkopf an das Basismaterial (34) ankoppelbar ist, b) den Empfangsschwinger (26) sowie den Sendeschwinger (24) aufnimmt und c) eine Schallgeschwindigkeit Cv hat, der Sendeschwinger (24) und der Empfangsschwinger (26) jeweils schräg zueinander und schräg zur Koppelfläche (22) unter einem Eintrittswinkel (αv) ausgerichtet sind, sodass eine Hauptsenderichtung des Sendeschwingers (24) und eine Hauptempfangsrichtung des Empfangsschwingers sich unterhalb der Koppelfläche (22) schneiden, Sendeschwinger (24) und Empfangsschwinger (26) einen Mittenabstand K voneinander haben, der Sendeschwinger (24-) und der Empfangsschwinger (26) einen Mittenabstand Dv von der Koppelfläche (22) hat, bei welchem Verfahren ein Ultraschallimpuls vom Sendeschwinger (24) erzeugt wird, durch den Vorlaufkörper (20) in das Basismaterial (34) läuft, dort eine Kriechwelle (35) hervorruft und von dieser ein Teil über den Vorlaufkörper (20) den Empfangsschwinger (26) erreicht, **dadurch gekennzeichnet, dass** die kürzeste Schalllaufzeit Ttot gemessen wird, die bei unterschiedlichen, sich im Eintrittswinkel (α$_v$) unterscheidenden Schalllaufwegen auftritt, und die Schallgeschwindigkeit Cb im Basismaterial (34) bestimmt wird über denjenigen Weg zwischen Sendeschwinger (24) und Empfangsschwinger, der die kürzeste Gesamtlaufzeit Ttot liefert.

2. Verfahren nach Anspruch 1, **dadurch gekennzeichnet, dass** derjenige Weg, der die kürzeste Gesamtlaufzeit Ttot liefert, bestimmt wird durch Aufsummieren der Laufstrecke vom Sendeschwinger (24) zum Basismaterial (34), der Laufstrecke im Basismaterial (34) und der Laufstrecke vom Basismaterial (34) zum Empfangsschwinger (26) und Optimieren dieser Laufstrecken hinsichtlich der kürzesten Gesamtlaufzeit Ttot, insbesondere differenzieren nach dem Eintrittswinkel (α$_v$).

3. Verfahren nach Anspruch 1, **dadurch gekennzeichnet, dass** die kürzeste Gesamtlaufzeit Ttot erhalten wird über

$$T_{tot} = \frac{K}{Cb} + 2Dv\left(\frac{1}{Cv\cos(\arcsin(\frac{Cv}{Cb}))} - \frac{\tan(\arcsin(\frac{Cv}{Cb}))}{Cb}\right).$$

4. Verfahren nach Anspruch 1, **dadurch gekennzeichnet, dass** Sendeschwinger (24) und Empfangsschwinger (26) baugleich sind, dass ihre Hauptstrahlen (38, 40) in derselben Ebene liegen und dass ihre Hauptstrahlen (38, 40) im selben Eintrittswinkel (α$_v$) zur Koppelfläche (22) verlaufen.

5. Verfahren zur Bestimmung der Schallgeschwindigkeit in einem Überzugsmaterial, das sich als Schicht (46) auf dem Basismaterial (34) befindet, bei welchem Verfahren zunächst gemäss Anspruch 1 die Schallgeschwindigkeit Cb im Basismaterial (34) bestimmt wird und anschliessend der Prüfkopf auf die Schicht (46) aufgesetzt wird, die eine Dicke Ds aufweist, ein Ultraschallimpuls vom Sendeschwinger- (24) erzeugt wird, der schräg zur Koppelfläche (22) sowohl durch den Vorlaufkörper (20) als auch durch die Schicht (46) hindurchläuft, eine Kriechwelle im Basismaterial (34) hervorruft und von dieser wieder als Teil durch die Schicht (46) und durch den Vorlaufkörper (20), schräg zur Koppelfläche, den Empfangsschwinger (26) erreicht, dass das Empfangssignal mit der kürzesten Gesamtlaufzeit Ttot erfasst und gemessen wird und dass die Schichtdicke Ds der Schicht (46) ermittelt wird aus demjenigen Weg, der die kürzeste Gesamtlaufzeit Ttot liefert.

6. Verfahren zur Bestimmung der Schallgeschwindigkeit Cs in einem Überzugsmaterial nach Anspruch 5, **dadurch gekennzeichnet, dass** die kürzeste Gesamtlaufzeit Ttot erhalten wird aus

$$Ttot = \frac{K}{Cb} + 2(Dv(\frac{1}{Cv\cos\arcsin(\frac{Cv}{Cb})} - \frac{\tan\arcsin(\frac{Cv}{Cb})}{Cb}) + Ds(\frac{1}{Cs\cos\arcsin(\frac{Cs}{Cb})} - \frac{\tan\arcsin(\frac{Cs}{Cb})}{Cb})),$$

mit Ds = Dicke der Schicht.

## Claims

1. Method for determining the sound velocity Cb in a base material (34), using an ultrasonic probe comprising a transmitting transducer (24), a receiving transducer (26) and a leading body (20), the leading body (20) a) having a coupling surface (22) with which the probe can be coupled to the base material (34), b) accommodating the receiving transducer (26) and the transmitting transducer (24), and c) having a sound velocity Cv, the transmitting transducer (24) and the receiving transducer (26), respectively, being oriented obliquely relative each other and obliquely relative to the coupling surface (22) under an entrance angle ($\alpha_v$), so that a main transmission direction of the transmitting transducer (24) and a main receiving direction of the receiving transducer intersect below the coupling surface (22), the transmitting transducer (24) and receiving transducer (26) being spaced apart at a centre-to-centre distance K, the transmitting transducer (24) and the receiving transducer (26) being spaced at a centre-to-centre distance Dv from the coupling surface (22), in which method an ultrasonic pulse is generated by the transmitting transducer (24), passes through the leading body (20) into the base material (34), there produces a creeping wave (35), at least a portion of which reaches the receiving transducer (26) via the leading body (20), **characterised in that** the shortest sound travel time Ttot is measured which occurs in the case of different sound travel paths that differ in the entrance angle ($\alpha_v$), and the sound velocity Cb in the base material (34) is determined by means of the path between the transmitting transducer (24) and the receiving transducer that provides the shortest total travel time Ttot

2. Method according to claim 1, **characterised in that** the path that provides the shortest total travel time Ttot is determined by adding the travel distance from the transmitting transducer (24) to the base material (34), the travel distance within the base material (34) and the travel distance from the base material (34) to the receiving transducer (26) and by optimizing these travel distances with regard to the shortest total travel time Ttot, in particular differentiating with regard to the entrance angle ($\alpha_v$)

3. Method according to claim 1, **characterised in that** the shortest total travel time Ttot is obtained through

$$T_{tot} = \frac{K}{Cb} + 2Dv(\frac{1}{Cv\cos(\arcsin(\frac{Cv}{Cb}))} - \frac{\tan(\arcsin(\frac{Cv}{Cb}))}{Cb}).$$

4. Method according to claim 1, **characterised in that** the transmitting transducer (24) and the receiving transducer (26) are identical in construction, that their main beams (38, 40) lie in the same plane, and that their main beams (38, 40) extend at the same entrance angle ($\alpha v$) relative to the coupling surface (22).

5. Method for determining the sound velocity in a coating material located as a layer (46) on the base material (34), in which method the sound velocity Cb in the base material (34) is first determined in accordance with claim 1, and then the probe is placed onto the layer (46) having a thickness Ds, an ultrasound pulse is generated by the transmitting transducer (24) that passes both the leading body (20) and the layer (46) obliquely relative to the coupling surface (22), produces a creeping wave in the base material (34), and, starting therefrom, reaches as a portion the receiving transducer(26), running through the layer (46) and the leading body (20) and obliquely relative to the coupling surface (26), that the receive signal with the shortest total travel time Ttot is detected and measured, and that the coating thickness Ds of the layer (46) is determined from the path that provides the shortest total travel time Ttot.

6. Method for determining the sound velocity Cs in a coating material according to claim 5, **characterised in that** the shortest total travel time Ttot is obtained through

$$T_{tot} = \frac{K}{Cb} + 2(Dv(\frac{1}{Cv\cos\arcsin(\frac{Cv}{Cb})} - \frac{\tan\arcsin(\frac{Cv}{Cb})}{Cb} + Ds(\frac{1}{Cs\cos\arcsin(\frac{Cs}{Cb})} - \frac{\tan\arcsin(\frac{Cs}{Cb})}{Cb})),$$

with Ds = thickness of the layer.

## Revendications

1. Procédé de détermination de la vitesse du son Cb dans un matériau de base (34) en utilisant un palpeur à ultrasons qui comprend un oscillateur émetteur (24), un oscillateur récepteur (26) et un corps de couplage (20), ledit corps de couplage (20) a) comprenant une surface de couplage (22) par laquelle ledit palpeur peut être couplé au matériau de base (34), b) recevant ledit oscillateur récepteur (26) ainsi que ledit oscillateur émetteur (24) et c) présentant une vitesse du son Cv, ledit oscillateur émetteur (24) et ledit oscillateur récepteur (26) étant orientés respectivement obliquement l'un par rapport à l'autre et obliquement par rapport à ladite surface de couplage (22) sous un angle d'entrée (αv) de sorte qu'une direction principale d'émission de l'oscillateur émetteur (24) et une direction principale de réception de l'oscillateur récepteur se coupent au-dessous de la surface de couplage (22), ledit oscillateur émetteur (24) et ledit oscillateur récepteur (26) présentant un entraxe K l'un par rapport à l'autre, ledit oscillateur émetteur (24) et ledit oscillateur récepteur (26) présentant un entraxe Dv par rapport à la surface de couplage (22), procédé dans lequel une impulsion ultrasonore est générée par ledit oscillateur émetteur (24), traverse ledit corps de couplage (20) et entre dans le matériau de base (34) où elle provoque une onde de cheminement (35) et une partie de celle-ci atteint ledit oscillateur récepteur (26) en passant par ledit corps de couplage (22), **caractérisé par le fait que** l'on mesure le plus court temps de propagation du son Ttot qui se présente dans le cas de trajectoires différentes du son se distinguant les une des autres en terme d'angle d'entrée (αv), et on détermine la vitesse du son Cb dans le matériau de base (34) sur celui des chemins entre l'oscillateur émetteur (24) et l'oscillateur récepteur, qui fournit le plus court temps total de propagation Ttot.

2. Procédé selon la revendication, 1, **caractérisé par le fait que** ledit chemin qui fournit le plus court temps total de propagation Ttot est déterminé en additionnant la trajectoire de propagation depuis l'oscillateur émetteur (24) jusqu'au matériau de base (34), la trajectoire de propagation dans ledit matériau de base (34) ainsi que la trajectoire de propagation depuis le matériau de base (34) jusqu'à l'oscillateur récepteur (26) et en optimisant ces trajectoires de propagation quant au plus court temps total de propagation Ttot, en particulier en différenciant selon ledit angle d'entrée (αv).

3. Procédé selon la revendication 1, **caractérisé par le fait que** le plus court temps total de propagation Ttot est obtenu par

$$T_{tot} = \frac{K}{Cb} + 2Dv\left(\frac{1}{Dv\cos(\arcsin(\frac{Cv}{Cb}))} - \frac{\tan(\arcsin(\frac{Cv}{Cb}))}{Cb}\right).$$

4. Procédé selon la revendication 1, **caractérisé par le fait que** ledit oscillateur émetteur (24) et ledit oscillateur récepteur (26) sont de construction identique, que leurs rayons principaux (38, 40) sont situés dans le même plan et que leurs rayons principaux (38, 40) s'étendent au même angle d'entrée ($\alpha$v) par rapport à ladite surface de couplage (22).

5. Procédé de détermination de la vitesse du son dans un matériau de revêtement qui est présent en tant que couche (46) sur le matériau de base (34), procédé dans lequel, d'abord, la vitesse du son Cb dans ledit matériau de base (34) est déterminée selon la revendication 1 et, ensuite, le palpeur est posé sur ladite couche (46) qui présente une épaisseur Ds, une impulsion ultrasonore est générée par ledit oscillateur émetteur (24), qui traverse - obliquement par rapport à ladite surface de couplage (22) - aussi bien le corps de couplage (20) que la couche (46), provoque une onde de cheminement dans le matériau de base (34) et atteint, en tant que partie de celle-ci, à nouveau et obliquement par rapport à la surface de couplage, ledit oscillateur récepteur (26), en passant par ladite couche (46) et par ledit corps de couplage (20), que le signal de réception avec le plus court temps total de propagation Ttot est saisi et mesuré et que l'épaisseur Ds de la couche (46) est déterminée à partir du chemin qui fournit le plus court temps total de propagation Ttot.

6. Procédé de détermination de la vitesse du son Cs dans un matériau de revêtement selon la revendication 5, **caractérisé par le fait que** le plus court temps total de propagation Ttot est obtenu par

$$Ttot = \frac{K}{Cb} + 2\left(Dv\left(\frac{1}{Dv\cos\arcsin(\frac{Cv}{Cb})} - \frac{\tan\arcsin(\frac{Cv}{Cb})}{Cb}\right) + DS\left(\frac{1}{Cs\cos\arcsin(\frac{Cs}{Cb})} - \frac{\tan\arcsin(\frac{Cs}{Cb})}{Cb}\right)\right),$$

avec Ds = épaisseur de la couche.

# Fig. 1

# Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6035717 A